# EUROPÄISCHE PATENTSCHRIFT

(11) **EP 4 264 381 B1**
(45) Veröffentlichungstag und Bekanntmachung des Hinweises auf die Patenterteilung: **01.04.2026**
(21) Anmeldenummer: 21816373.1
(22) Anmeldetag: 18.11.2021
(51) Int. Cl.: G05B 17/02, G05B 19/418

(54) **VERFAHREN ZUM ERSTELLEN EINER DIGITALEN REPRÄSENTATION EINER ANLAGE DER PROZESSAUTOMATISIERUNG IN EINER CLOUDBASIERTEN SERVICEPLATTFORM**
METHOD FOR GENERATING A DIGITAL REPRESENTATION OF A PROCESS AUTOMATION SYSTEM ON A CLOUD-BASED SERVICE PLATFORM
PROCÉDÉ DE GÉNÉRATION D'UNE REPRÉSENTATION NUMÉRIQUE D'UN SYSTÈME D'AUTOMATISATION DE PROCESSUS SUR UNE PLATEFORME DE SERVICE EN NUAGE

(30) Priorität: 15.12.2020 DE 102020133618
(43) Veröffentlichungstag der Anmeldung: 25.10.2023
(73) Patentinhaber: Endress+Hauser Process Solutions AG, 4153 Reinach (CH)
(72) Erfinder: FRANKE, Alexander, 4127 Birsfelden (CH); GRINER, Stefan, 4415 Lausen (CH); WAGNER, Joachim, 79540 Lörrach (DE); VOEGEL, Michael, 68220 Hagenthal le bas (FR)
(74) Vertreter: Endress + Hauser Group Services (Deutschland) AG+Co. KG
(86) Internationale Anmeldenummer: PCT/EP2021/082186
(87) Internationale Veröffentlichungsnummer: WO 2022/128322

(56) Entgegenhaltungen:
- EP-A1- 3 070 550
- EP-A1- 3 696 622
- US-A1- 2018 292 983

## Beschreibung

Die Erfindung betrifft ein Verfahren zum Erstellen einer digitalen Repräsentation einer Anlage der Prozessautomatisierung in einer cloudbasierten Serviceplattform, wobei die Anlage eine Vielzahl von Messstellen und Assets, insbesondere Feldgeräte, aufweist, wobei in jeder der Messstellen eines oder mehrere Assets eingebunden sind, wobei die Assets über ein Kommunikationsnetzwerk mit einem Edge Device in Kommunikationsverbindung stehen, und wobei das Edge Device die cloudbasierte Serviceplattform über das Internet kontaktiert und Daten der Assets an die cloudbasierte Serviceplattform übermittelt.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

EP 3 696 622 A1 offenbart ein industrielles Automatisierungssystem, das für die modellbasierte Analyse und Visualisierung von Industriedaten verwendet wird. EP 3 070 550 A1 offenbart ein System zur Modellierung einer industriellen Automatisierungsumgebung in einer Cloud-Plattform durch industrielle Geräte in einem industriellen Automatisierungssystem. US 2018/292983 A1 beschreibt eine Methode zur Zuordnung von Sensor-Tags von Assets zu Eingangsports eines Analyseprozesses.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Die in der Anlage eingesetzten Komponenten, bzw. Geräte, also Feldgeräte, Netzwerkgeräte wie Gateways, Edge Devices, etc. und Steuereinheiten werden als Assets bezeichnet.

Feldgeräte der Automatisierungsindustrie liefern neben den Prozesswerten auch Analyse- und Statusdaten, welche für die Wartung und Pflege der Assets als auch zur Bewertung des Zustands des Anlagenteile, in denen sie installiert sind, von entscheidender Bedeutung sind. Für eine möglichst gute und umfangreiche Analyse der aus den Feldgeräten gewonnen Daten ist es notwendig, sie zentral zu sammeln und differenziert den Personenkreisen und Auswertesystemen zur Verfügung zu stellen, die ihre Expertise für die Bewertung der Zustände von Anlagenteilen und deren Assets einbringen können. Für die hierfür benötigten Funktionen der Datenhaltung, Datensicherheit und Datenbearbeitung gibt es mittlerweile Dienstanbieter, wie beispielweise von der Firma "Endress+Hauser" mit der Plattform "Netilion".

Um diese Daten von Assets in die sogenannte Cloud (eine cloudfähige Serviceplattformen, welcher per Internet kontaktiert werden kann) im Rahmen von oben genannten digitalen Services transportiert zu können, werden sogenannte Edge Devices eingesetzt, welcher Daten der Assets mithören oder abrufen und per Internet in die Cloud laden.

Die von den Assets auf diesem Wege gesammelten Daten werden heutzutage typischerweise unsortiert von den entsprechenden Edge Devices zur Cloud übertragen. Die digitalisierten, in der Cloud vorhandenen Anlagendaten spiegeln die Realität nicht wider - weder funktional noch geografisch. Dem Benutzer fällt es daher schwer, die relevanten Teile seiner Anlage zu identifizieren. Damit das digitale Abbild der Anlage in der Cloud in höherem Maße die Realität widerspiegelt, muss der Nutzer erhebliche Arbeitsaufwände investieren, mit allen damit verbundenen Nachteilen manueller Arbeitsprozesse.

Der Erfindung liegt die Aufgabe zugrunde, ein Verfahren vorzustellen, welches eine einfache Strukturierung der in eine Cloud übertragenen Daten von Assets erlaubt.

Die Aufgabe wird durch ein Verfahren zum Erstellen einer digitalen Repräsentation einer Anlage der Prozessautomatisierung in einer cloudbasierten Serviceplattform gelöst, wobei die Anlage eine Vielzahl von Messstellen und Assets, insbesondere Feldgeräte, aufweist, wobei in jeder der Messstellen eines oder mehrere Assets eingebunden sind, wobei die Assets über ein Kommunikationsnetzwerk mit einem Edge Device in Kommunikationsverbindung stehen, und wobei das Edge Device die cloudbasierte Serviceplattform über das Internet kontaktiert und Daten der Assets an die cloudbasierte Serviceplattform übermittelt, umfassend:
- Auslesen von TAG-Informationen mittels des Edge Devices von jedem der Assets, wobei die TAG-Informationen jeweils im Datentyp einer Zeichenkette, insbesondere in einem String-Datentyp, vorliegen und wobei die TAG-Informationen die hierarchische Struktur des jeweiligen Assets in der Anlage repräsentieren;
- Übermitteln der TAG-Informationen von dem Edge Device an die cloudbasierte Serviceplattform;
- Parsen aller TAG-Informationen durch eine auf der cloudbasierten Serviceplattform ausgeführten Anwendung, wobei für das Parsen eine Logik verwendet wird, und wobei mithilfe der Logik jeweils zumindest der Name des Assets und der Namen derjenigen Messstelle, in welcher das jeweilige Asset eingebunden ist, aus den TAG-Informationen extrahiert wird; und
- Erstellen eines Strukturplans der Anlage mittels der Anwendung, wobei der Strukturplan alle aus den TAG-Informationen extrahierten Messstellen der Anlage mit allen den Messstellen zugeordneten, aus den TAG-Informationen extrahierten Assets aufweist.

Der Vorteil des erfindungsgemäßen Verfahrens besteht darin, dass automatisch die Struktur einer Anlage in der cloudbasierten Serviceplattform erstellt wird. Hierfür werden die TAG-Informationen von allen Assets ausgelesen und analysiert, bzw. geparst. Die TAG-Informationen werden einem Asset bei Installation und Inbetriebnahme in der entsprechenden Messstelle der Anlage zugewiesen. Üblicherweise wird für die TAG-Informationen ein System oder Format des jeweiligen Kunden verwendet, so dass typischerweise keine Einheitlichkeit bei TAG-Informationen vorliegt. Durch das Parsen werden jedoch Muster innerhalb der TAG-Informationen gesucht. Beispielsweise ist der Inhalt der TAG-Informationen häufig sehr ähnlich und enthält typischerweise mindestens der Name des entsprechenden Assets und den Namen derjenigen Messstelle, in welcher das jeweilige Asset eingebunden ist. Nach erfolgtem Analysieren, bzw. Parsen werden die aus den TAG-Informationen gewonnenen Informationen derart einem Strukturplan hinzugefügt, dass dieser die in der Anlage befindlichen Messstellen korreliert mit den in den Messstellen befindlichen Assets enthält. Werden anschließend Daten eines Assets mittels des Edge Devices in die Cloud geladen, so können diese entsprechend des Strukturplans auf der cloudbasierten Serviceplattform sortiert gespeichert und anschließend entsprechend des Strukturplans sortiert aufgerufen werden.

Im Sinne des erfindungsgemäßen Verfahrens werden als Assets alle in einer Anlage eingesetzten Geräte, insbesondere Feldgeräte, Netzwerkgeräte und Steuerungsgeräte, verstanden. Beispiele für Feldgeräte sind bereits im einleitenden Teil der Beschreibung aufgeführt worden.

Als "cloudbasierte Serviceplattform" wird ein für einen Benutzer per Internet kontaktierbarer Server bezeichnet, auf dem eine oder mehrere Applikationen ausgeführt werden, welche ein Anzeigen, Verarbeiten und Verwalten von Daten der Assets einer Anlage ermöglicht.

Gemäß einer vorteilhaften Ausgestaltung des erfindungsgemäßen Verfahrens ist vorgesehen, dass die Logik anhand benutzerdefinierter Regeln erstellt wird. Hierbei wird dem Benutzer eine Benutzeroberfläche von der Anwendung zur Verfügung gestellt, in welche er die benutzerdefinierten Regeln eingeben kann. Dies ist insbesondere dann geeignet, wenn die TAG-Informationen in einer Anlage einem systematischen, bzw. konsistenten Aufbau folgen.

Vorteilhafterweise enthalten die benutzerdefinierten Regeln zumindest eine der folgenden Informationen:
- Das Format der TAG-Informationen;
- Eine vorgeschriebene Position, Länge und/oder Reihenfolge des Namens des Assets und/oder des Namens der Messstelle in den TAG-Informationen;
- Trennzeichen, welche den Beginn und/oder das Ende des Namens des Assets und/oder des Namens der Messstelle in den TAG-Informationen anzeigen.

Mögliche Trennzeichen sind beispielsweise Punkte, Kommata, Bindestriche, Unterstriche, o.ä.

Gemäß einer vorteilhaften Ausgestaltung des erfindungsgemäßen Verfahrens ist vorgesehen, dass die Logik einen Kl-Algorithmus verwendet, wobei der Kl-Algorithmus mittels Trainingsdaten eingelernt wird, und wobei die Trainingsdaten aus Strukturplänen weiterer Anlagen korreliert mit den TAG-Informationen der in den Strukturplänen der weiteren Anlangen enthaltenen Assets bestehen. Insbesondere werden die TAG-Informationen derart untersucht, dass das Format, Schlagwörter (z.B. typische Bezeichnungen für Assets und/oder Messstellen), Trennzeichen o.ä. automatisch detektiert und korrekt interpretiert werden. Der Kl-Algorithmus kann auch mit Trainingsdaten aus Datenbanken des Herstellers eingelernt werden, beispielsweise in Datenbanken betreffend den Lebenszyklus der Feldgeräte, in welchen entsprechende TAG-Informationen der Feldgeräte vorgehalten werden.

Gemäß einer vorteilhaften Weiterbildung des erfindungsgemäßen Verfahrens ist vorgesehen, dass die Anwendung oder eine weitere auf der cloudbasierten Serviceplattform ausgeführte Anwendung anhand des Strukturplans eine virtuelle zwei- oder dreidimensionale Karte der Anlage erstellt, auf welcher Karte die Lage der Messstellen und der den Messstellen zugeordneten Assets geographisch visualisiert werden. Dem Benutzer ergibt sich somit der Vorteil, dass er seine Anlage visuell auf der cloudbasierten Serviceplattform repräsentiert sieht. Die Zuordnung der Assets und der Daten der Assets wird dadurch vereinfacht. Auch können eventuelle falsche Zuordnungen leichter identifiziert werden.

Um die grafische Darstellung der Anlage so real wie möglich zu in der Karte wiederzugeben, kann es vorgesehen sein, weitere vefügbre Informationen der Feldgeräte miteinzubeziehen. Beispielsweise kann der Gerätetyp eines Feldgeräts abgefragt werden, so dass auf der Karte ein entsprechendes korrektes Symbol platziert wird (Duchflussmesser, Pumpe, etc.).

Auch können, falls Informationen über ein Feldgerät nicht verfügbar sind, Informationen eines benachbarten Feldgeräts herangezogen werden. Beispielsweise wird anhand der TAG-Informationen erkennt, dass ein zweites Feldgerät sich am selben Standort wie ein erstes Feldgerät in der Anlage befinden müsste. Somit kann die Standort-Information des ersten Feldgerätes auf das zweite Feldgerät übertragen werden.

Gemäß einer vorteilhaften Ausgestaltung des erfindungsgemäßen Verfahrens ist vorgesehen, dass die Karte, falls zweidimensional, auf Grundlage eines in die Anwendung eingefügten Bildes erstellt wird, oder wobei die Karte, falls dreidimensional, auf Grundlage eines dreidimensionalen Anlagenmodells erstellt wird. Das Bild, bzw. das Anlagenmodell, wird mit den Einbaupositionen, bzw. Ortspositionen der Messstellen ergänzt. Anschließend werden den Messstellen die Namen der zugehörigen Assets hinzugefügt.

Gemäß einer vorteilhaften Ausgestaltung des erfindungsgemäßen Verfahrens ist vorgesehen, dass eine geographische Position der Messstellen auf der Karte manuell erstmalig bestimmt und/oder geändert wird. Der Benutzer kann die Einbaupositionen, bzw. Ortspositionen der Messstellen über eine graphische Benutzeroberfläche zuweisen. Dafür kann er beispielsweise ein das die Messstelle repräsentierendes Symbol oder Textfeld oder dem Namen der Messstelle aus dem Strukturplan auf die entsprechende Position auf der Karte ziehen. Änderungen der Position können per Drag&Drop vorgenommen werden.

Gemäß einer vorteilhaften Ausgestaltung des erfindungsgemäßen Verfahrens ist vorgesehen, dass für diejenigen TAG-Informationen, aus denen der Namen des Assets und/oder der Namen derjenigen Messstelle, in welcher das jeweilige Asset eingebunden ist, nicht extrahiert werden kann, der entsprechende Name des Assets und/oder der entsprechende Name der Messstelle manuell zu dem Strukturplan hinzugefügt wird. Hierbei kann es vorgesehen sein, dass der Benutzer nach erfolgtem Parsen, bzw. Analyse eine Meldung erhält, welche von ihm eine Eingabe der fehlenden Informationen zu den entsprechenden TAG-Informationen fordert.

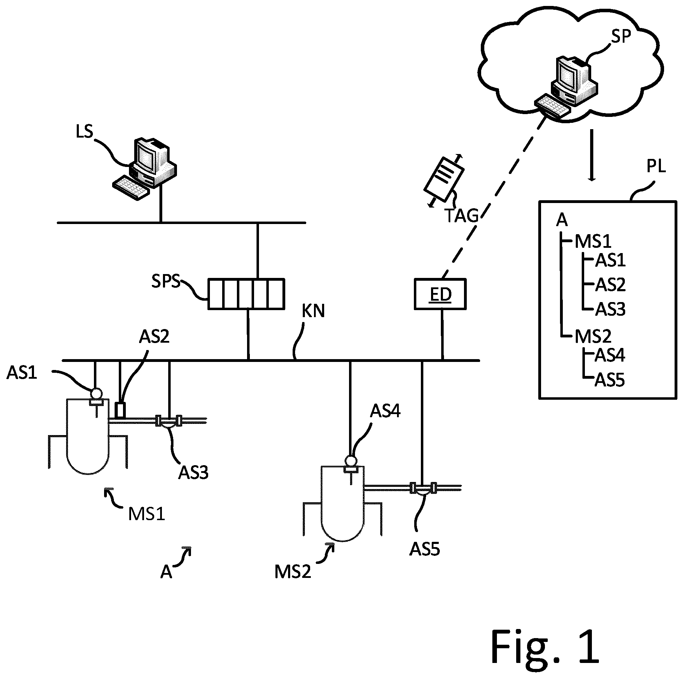

Die Erfindung wird anhand der nachfolgenden Figuren näher erläutert. Es zeigen
Fig. 1: ein Ausführungsbeispiel des erfindungsgemäßen Verfahrens.

In Fig. 1 sind Teile einer Anlage A der Automatisierungstechnik abgebildet. Konkret handelt es sich um zwei Messstellen MS1, MS2, welches mehrere Assets AS1, AS2, AS3, AS4, AS5 aufweisen, bei welchen es sich um Feldgeräte handelt. Die Messstellen bestehen jeweils aus einem Tank und einer von dem Tank abführenden Rohrleitung. Zur Messung des Füllstands des Tanks als Prozessgröße ist jeweils ein Füllstandmessgerät als Asset AS1, AS4 beispielsweise mit einem Radar als Sensoreinheit am Tank angebracht. Zur Messung der Durchflussgeschwindigkeit in der Rohrleitung ist jeweils ein Durchflussmessgerät als Asset ein Feldgerät AS3, AS5 angebracht, dessen Sensoreinheit die Durchflussgeschwindigkeit eines die Rohrleitung durchströmenden Mediums als primäre Prozessgröße nach dem Coriolisprinzip bestimmt. Des Weiteren ist in der Messstelle MS1 ein Temperaturmessgerät als Asset AS2 angebracht, welches die Temperatur des die Rohrleitung durchströmenden Messmediums mittels eines hochpräzisen Temperatursensors als Sensoreinheit bestimmt.

Die Assets AS1, ..., AS5 sind untereinander mittels eines Kommunikationsnetzwerks KN verbunden und stehen miteinander in Kommunikationsverbindung. Bei dem Kommunikationsnetzwerk KN handelt es sich insbesondere um ein Ethernet-Netzwerk. Alternativ handelt es sich bei dem Kommunikationsnetzwerk KN um einen Feldbus nach einem der bekannten Feldbusstandards, beispielsweise Profibus, Foundation Fieldbus oder HART.

Das Kommunikationsnetzwerk KN beinhaltet eine übergeordnete Einheit SPS, beispielsweise eine speicherprogrammierbare Steuerung, welche Befehle an die Assets AS11, ..., AS5 übermittelt, woraufhin die Assets AS1, ..., AS5 Prozesswerte, Diagnosedaten und Statusinformationen an die übergeordnete Einheit SPS übermitteln. Diese Prozesswerte, Diagnosedaten und Statusinformationen werden von der übergeordneten Einheit SPS an einen Workstation-PC in der Leitstelle LS der Anlage A weitergeleitet. Dieser dient unter anderem zur Prozessvisualisierung, Prozessüberwachung und zum Engineering wie zum Bedienen und Überwachen der Assets AS1, ..., AS5.

Des Weiteren das Kommunikationsnetzwerk KN ein Edge Device ED, welches die von den in der jeweiligen Messstelle MS1, MS2 enthaltenen Assets AS1, ..., AS5 an die übergeordnete Einheit SPS übermittelten Prozesswerte, Diagnosedaten und Statusinformationen mithört und ggf. weitere Daten von den Assets AS1, ..., AS5 abfragt.

Über das Internet etabliert die Datenverarbeitungseinheit DV1, DV2 eine Kommunikationsverbindung zu einer Serviceplattform SP. Die Serviceplattform SP ist dazu ausgestaltet, Applikationen auszuführen. Beispielsweise handelt es sich bei einer solchen Applikation um ein Plant Asset Management-System, welches zum Verwalten der Assets AS1, ..., AS5 dient.

Nach Etablieren der Kommunikationsverbindung zu der cloudbasierten Serviceplattform SP übermittelt das Edge Device die mitgehörten und/oder aufgezeichneten Daten der Assets AS1, ..., AS5 an die cloudbasierte Serviceplattform SP. Um die Daten dort strukturiert zu speichern, wird ein Strukturplan PL, welcher insbesondere als Baumstruktur vorliegt und eine Zuordnung aller in der Anlage A enthaltenen Assets AS1, ..., AS5 zu deren Messstellen MS1, MS2 enthält.

Um diesen Strukturplan SP nicht aufwendig manuell erstellen zu müssen, fragt das Edge Device ED zum Erstellen des Strukturplans ED die TAG-Informationen TAG aller Assets AS1, ..., AS5 ab. Die TAG-Informationen TAG werden einem Asset AS1, ..., AS5 bei Installation und Inbetriebnahme in der entsprechenden Messstelle MS1, MS2 der Anlage zugewiesen und enthalten üblicherweise Hinweise auf die Anlage A, die Messstelle MS1, MS2 und den Namen des Assets AS1, ..., AS5.

Die ausgelesenen TAG-Informationen TAG werden von dem Edge Device ED an die cloudbasierte Serviceplattform SP übermittelt. Ein auf der cloudbasierte Serviceplattform SP ausgeführte Applikation führt anschließend mittels einer Logik ein Parsen der TAG-Informationen durch und extrahiert zumindest die Namen der Assets AS1, ..., AS5, sowie die Messstellen MS1, MS2, in welchen die entsprechenden Assets AS1, ..., AS5 eingesetzt sind.

Hierfür verwendet die Logik entweder ein Regelwerk, welches der Benutzer eingegeben hat, oder einen Kl-Algorithmus. In beiden Fällen werden die TAG-Informationen TAG auf bestimmte Bestandteile, wie beispielsweise Trennzeichen oder vorgeschriebene Position, Länge und/oder Reihenfolge des Namens der Assets AS1, ..., AS5 und/oder des Namens der Messstelle MS1, MS2 untersucht.

Beispielsweise lautet die ausgelesene TAG-Information des Assets AS4:
Plant123_Unit23_LT01

Die Logik weiß, anhand der benutzerdefinierten Regeln, dass in der TAG-Information TAG zuerst der Name der Anlage A enthalten ist, anschließend der Name der Messstelle MS1, MS2 und abschließend der Name des Assets AS1, ..., AS5. Die einzelnen Informationen sind durch Unterstriche als Trennzeichen voneinander abgesetzt. Außerdem ist der Logik bekannt, dass der Name eines Assets AS1, ..., AS5 im vorliegenden Fall vierstellig ist. Unter Kenntnis dieser Eigenschaften extrahiert die Logik den Namen der Anlage A ("Plant123"), den Namen der Messstelle MS2 (Unit23), sowie den Namen des Assets AS4 ("LT01 ").

Dieser Vorgang wird für alle Assets AS1, ..., AS5 wiederholt. Im Falle, dass eine Information nicht aus den TAG-Informationen TAG auslesbar ist, erhält der Benutzer nach erfolgtem Parsen, bzw. Analyse eine Meldung, welche von ihm eine Eingabe der fehlenden Informationen zu den entsprechenden TAG-Informationen fordert.

Abschließend wird basierend auf den extrahierten, bzw. manuelle eingegebenen Informationen der Strukturplan PL erstellt. Im Strukturplan PL erfolgt die Zuordnung der Assets AS1, ..., AS5 zu deren entsprechenden Messstellen MS1, MS2. Im obig beschriebenen Beispiel könnte der Asset AS4 wie folgt einsortiert werden:

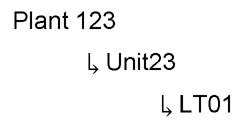

Die von dem Edge Device ED in die cloudbasierte Serviceplattform SP übermittelten Daten der Assets AS1, ..., AS5 werden nun entsprechend des Strukturplans PL sortiert gespeichert und anschließend entsprechend des Strukturplans PL sortiert aufgerufen werden. Der Strukturplan PL kann weiterhin in einer Karte der Anlage visualisiert werden (bspw. ähnlich der Anordnung der Messstellen wie in Fig. 1 gezeigt), welche die Ortspositionen aller Messstellen MS1, MS2 und der zugeordneten Assets anzeigt.

Das beschriebene Verfahren strukturiert die Daten automatisch so, dass sie der realen Anlage A besser entsprechen und für den Benutzer besser lesbar sind. Es reduziert auch den manuellen Arbeitsaufwand für die Erstellung der digitalen Repräsentation der Anlage in der cloudbasierten Serviceplattform SP, was in einer höheren Effizient und einem geringerem Fehleranteil resultiert.

### Bezugszeichenliste

- A: Anlage der Automatisierungstechnik
- AS1, AS2, ..., AS5: Assets
- KN: Kommunikationsnetzwerk
- LS: Leitstelle der Anlage
- MS1, MS2: Messstelle
- TAG: TAG-Informationen
- PL: Strukturplan
- SP: cloudbasierte Serviceplattform
- SPS: übergeordnete Einheit, Steuerung

## Patentansprüche

1. Verfahren zum Erstellen einer digitalen Repräsentation einer Anlage (A) der Prozessautomatisierung in einer cloudbasierten Serviceplattform (SP), wobei die Anlage (A) eine Vielzahl von Messstellen (MS1, MS2) und Assets (AS1, AS2, AS3, AS4, AS5), insbesondere Feldgeräte, aufweist, wobei in jeder der Messstellen (MS1, MS2) eines oder mehrere Assets (AS1, ..., AS5) eingebunden sind, wobei die Assets (AS1, ..., AS5) über ein Kommunikationsnetzwerk (KN) mit einem Edge Device (ED) in Kommunikationsverbindung stehen, und wobei das Edge Device (ED) die cloudbasierte Serviceplattform (SP) über das Internet kontaktiert und Daten der Assets (AS1, ..., AS5) an die cloudbasierte Serviceplattform (SP) übermittelt, umfassend:
- Auslesen von TAG-Informationen (TAG) mittels des Edge Devices (ED) von jedem der Assets (AS1, ..., AS5), wobei die TAG-Informationen (TAG) jeweils im Datentyp einer Zeichenkette, insbesondere in einem String-Datentyp, vorliegen und wobei die TAG-Informationen (TAG) die hierarchische Struktur des jeweiligen Assets (AS1, ..., AS5) in der Anlage (A) repräsentieren;
- Übermitteln der TAG-Informationen (TAG) von dem Edge Device (ED) an die cloudbasierte Serviceplattform (SP);
- Parsen aller TAG-Informationen (TAG) durch eine auf der cloudbasierten Serviceplattform (SP) ausgeführten Anwendung, wobei für das Parsen eine Logik verwendet wird, und wobei mithilfe der Logik jeweils zumindest der Name des Assets (AS1, ..., AS5) und der Namen derjenigen Messstelle (MS1, MS2), in welcher das jeweilige Asset eingebunden ist, aus den TAG-Informationen (TAG) extrahiert wird; und
- Erstellen eines Strukturplans (PL) der Anlage (A) mittels der Anwendung, wobei der Strukturplan (PL) alle aus den TAG-Informationen (TAG) extrahierten Messstellen (MS1, MS2) der Anlage (A) mit allen den Messstellen (MS1, MS2) zugeordneten, aus den TAG-Informationen (TAG) extrahierten Assets (AS1, ..., AS5) aufweist, insbesondere in einer Baumstruktur.

2. Verfahren nach Anspruch 1, wobei die Logik anhand benutzerdefinierter Regeln erstellt wird.

3. Verfahren nach Anspruch 2, wobei die benutzerdefinierten Regeln zumindest eine der folgenden Informationen enthalten:
- Das Format der TAG-Informationen (TAG);
- Eine vorgeschriebene Position, Länge und/oder Reihenfolge des Namens des Assets (AS1, ..., AS5) und/oder des Namens der Messstelle (MS1, MS2) in den TAG-Informationen (TAG);
- Trennzeichen, welche den Beginn und/oder das Ende des Namens des Assets (AS1, ..., AS5) und/oder des Namens der Messstelle (MS1, MS2) in den TAG-Informationen (TAG) anzeigen.

4. Verfahren nach Anspruch 1, wobei die Logik einen KI-Algorithmus verwendet, wobei der Kl-Algorithmus mittels Trainingsdaten eingelernt wird, und wobei die Trainingsdaten aus Strukturplänen weiterer Anlagen korreliert mit den TAG-Informationen (TAG) der in den Strukturplänen der weiteren Anlangen enthaltenen Assets (AS1, ..., AS5) bestehen.

5. Verfahren nach zumindest einem der vorherigen Ansprüche, wobei die Anwendung oder eine weitere auf der cloudbasierten Serviceplattform (SP) ausgeführte Anwendung anhand des Strukturplans (PL) eine virtuelle zwei- oder dreidimensionale Karte der Anlage (A) erstellt, auf welcher Karte die Lage der Messstellen (MS1, MS2) und der den Messstellen (MS1, MS2) zugeordneten Assets (AS1, ..., AS5) geographisch visualisiert werden.

6. Verfahren nach Anspruch 5, wobei die Karte, falls zweidimensional, auf Grundlage eines in die Anwendung eingefügten Bildes erstellt wird, oder wobei die Karte, falls dreidimensional, auf Grundlage eines dreidimensionalen Anlagenmodells erstellt wird.

7. Verfahren nach Anspruch 5 oder Anspruch 6, wobei eine geographische Position der Messstellen (MS1, MS2) auf der Karte manuell erstmalig bestimmt und/oder geändert wird.

8. Verfahren nach zumindest einem der vorherigen Ansprüche, wobei für diejenigen TAG-Informationen (TAG), aus denen der Namen des Assets (AS1, ..., AS5) und/oder der Namen derjenigen Messstelle (MS1, MS2), in welcher das jeweilige Asset eingebunden ist, nicht extrahiert werden kann, der entsprechende Name des Assets (AS1, ..., AS5) und/oder der entsprechende Name der Messstelle (MS1, MS2) manuell zu dem Strukturplan (PL) hinzugefügt wird.

## Claims

1. A method for creating a digital representation of an installation (A) of process automation in a cloud-based service platform (SP), the installation (A) comprising a plurality of measuring points (MS1, MS2) and assets (AS1, AS2, AS3, AS4, AS5), in particular field devices, wherein in each of the measuring points (MS1, MS2) one or more assets (AS1, ..., AS5) are integrated, wherein the assets (AS1, ..., AS5) are in communication connection with an edge device (ED) via a communication network (KN), and wherein the edge device (ED) contacts the cloud-based service platform (SP) via the Internet and transmits data of the assets (AS1, ..., AS5) to the cloud-based service platform (SP), the method comprising:
• reading TAG information (TAG) from each of the assets (AS1, ..., AS5) by means of the edge device (ED), the TAG information (TAG) being provided in each case in the data type of a character string, in particular in a string data type, and the TAG information (TAG) representing the hierarchical structure of the respective asset (AS1, ..., AS5) in the installation (A);
• transmitting the TAG information (TAG) from the edge device (ED) to the cloud-based service platform (SP);
• parsing all TAG information (TAG) by an application executed on the cloud-based service platform (SP), wherein a logic is used for the parsing, and wherein by means of the logic at least the name of the asset (AS1, ..., AS5) and the name of the measuring point (MS1, MS2) in which the respective asset is integrated are extracted from the TAG information (TAG); and
• creating a structural plan (PL) of the installation (A) by means of the application, wherein the structural plan (PL) comprises all measuring points (MS1, MS2) of the installation (A) extracted from the TAG information (TAG), together with all assets (AS1, ..., AS5) assigned to the measuring points (MS1, MS2) extracted from the TAG information (TAG), in particular in a tree structure.

2. The method according to claim 1, wherein the logic is created on the basis of user-defined rules.

3. The method according to claim 2, wherein the user-defined rules contain at least one of the following information:
• the format of the TAG information (TAG);
• a predetermined position, length and/or sequence of the name of the asset (AS1, ..., AS5) and/or the name of the measuring point (MS1, MS2) in the TAG information (TAG);
• delimiters indicating the beginning and/or the end of the name of the asset (AS1, ..., AS5) and/or the name of the measuring point (MS1, MS2) in the TAG information (TAG).

4. The method according to claim 1, wherein the logic uses an Al algorithm, wherein the Al algorithm is trained using training data, and wherein the training data consist of structural plans of further installations correlated with the TAG information (TAG) of the assets (AS1, ..., AS5) contained in the structural plans of the further installations.

5. The method according to at least one of the preceding claims, wherein the application or a further application executed on the cloud-based service platform (SP) creates a virtual two- or three-dimensional map of the installation (A) on the basis of the structural plan (PL), on which map the location of the measuring points (MS1, MS2) and the assets (AS1, ..., AS5) assigned to the measuring points (MS1, MS2) are visualized geographically.

6. The method according to claim 5, wherein the map, if two-dimensional, is created on the basis of an image inserted into the application, or wherein the map, if three-dimensional, is created on the basis of a three-dimensional installation model.

7. The method according to claim 5 or 6, wherein a geographical position of the measuring points (MS1, MS2) is determined for the first time and/or changed manually on the map.

8. The method according to at least one of the preceding claims, wherein for those TAG information (TAG) from which the name of the asset (AS1, ..., AS5) and/or the name of the measuring point (MS1, MS2) in which the respective asset is integrated cannot be extracted, the corresponding name of the asset (AS1, ..., AS5) and/or the corresponding name of the measuring point (MS1, MS2) is manually added to the structural plan (PL).

## Revendications

1. Procédé de création d'une représentation numérique d'une installation (A) d'automatisation des procédés dans une plateforme de services basée sur le cloud (SP), l'installation (A) comprenant une pluralité de points de mesure (MS1, MS2) et d'actifs (AS1, AS2, AS3, AS4, AS5), en particulier des appareils de terrain, chaque point de mesure (MS1, MS2) intégrant un ou plusieurs actifs (AS1, ..., AS5), les actifs (AS1, ..., AS5) étant en communication avec un dispositif Edge (ED) via un réseau de communication (KN), et le dispositif Edge (ED) contactant la plateforme de services basée sur le cloud (SP) via Internet et transmettant les données des actifs (AS1, ..., AS5) à la plateforme de services basée sur le cloud (SP), le procédé comprenant :
• la lecture, par le dispositif Edge (ED), d'informations TAG (TAG) provenant de chacun des actifs (AS1, ..., AS5), les informations TAG (TAG) étant fournies sous forme d'une chaîne de caractères, en particulier d'un type de données « string », et représentant la structure hiérarchique de l'actif (AS1, ..., AS5) correspondant dans l'installation (A) ;
• la transmission des informations TAG (TAG) du dispositif Edge (ED) vers la plateforme de services basée sur le cloud (SP) ;
• l'analyse (parsing) de l'ensemble des informations TAG (TAG) par une application exécutée sur la plateforme de services basée sur le cloud (SP), une logique spécifique étant utilisée pour cette analyse, ladite logique permettant d'extraire à partir des informations TAG (TAG) au moins le nom de l'actif (AS1, ..., AS5) et le nom du point de mesure (MS1, MS2) dans lequel l'actif correspondant est intégré ; et
• la création, par l'application, d'un plan structurel (PL) de l'installation (A), le plan structurel (PL) comprenant l'ensemble des points de mesure (MS1, MS2) extraits des informations TAG (TAG), ainsi que tous les actifs (AS1, ..., AS5) attribués à ces points de mesure (MS1, MS2) et extraits des informations TAG (TAG), en particulier sous forme d'une structure arborescente.

2. Procédé selon la revendication 1, dans lequel la logique est créée sur la base de règles définies par l'utilisateur.

3. Procédé selon la revendication 2, dans lequel les règles définies par l'utilisateur contiennent au moins l'une des informations suivantes :
• le format des informations TAG (TAG) ;
• une position, une longueur et/ou un ordre prédéterminé(s) du nom de l'actif (AS1, ..., AS5) et/ou du nom du point de mesure (MS1, MS2) dans les informations TAG (TAG);
• des séparateurs indiquant le début et/ou la fin du nom de l'actif (AS1, ..., AS5) et/ou du nom du point de mesure (MS1, MS2) dans les informations TAG (TAG).

4. Procédé selon la revendication 1, dans lequel la logique utilise un algorithme d'intelligence artificielle, l'algorithme étant entraîné au moyen de données d'apprentissage, et les données d'apprentissage étant constituées de plans structurels d'autres installations corrélés avec les informations TAG (TAG) des actifs (AS1, ..., AS5) contenus dans lesdits plans structurels d'autres installations.

5. Procédé selon au moins l'une des revendications précédentes, dans lequel l'application ou une autre application exécutée sur la plateforme de services basée sur le cloud (SP) crée, sur la base du plan structurel (PL), une carte virtuelle bidimensionnelle ou tridimensionnelle de l'installation (A), sur laquelle la localisation des points de mesure (MS1, MS2) et des actifs (AS1, ..., AS5) attribués aux points de mesure (MS1, MS2) est visualisée géographiquement.

6. Procédé selon la revendication 5, dans lequel la carte, si elle est bidimensionnelle, est créée sur la base d'une image insérée dans l'application, ou dans lequel la carte, si elle est tridimensionnelle, est créée sur la base d'un modèle tridimensionnel de l'installation.

7. Procédé selon la revendication 5 ou 6, dans lequel une position géographique des points de mesure (MS1, MS2) sur la carte est déterminée pour la première fois et/ou modifiée manuellement.

8. Procédé selon au moins l'une des revendications précédentes, dans lequel, pour les informations TAG (TAG) à partir desquelles le nom de l'actif (AS1, ..., AS5) et/ou le nom du point de mesure (MS1, MS2) dans lequel l'actif correspondant est intégré ne peuvent pas être extraits, le nom correspondant de l'actif (AS1, ..., AS5) et/ou le nom correspondant du point de mesure (MS1, MS2) est ajouté manuellement au plan structurel (PL).
